# EUROPEAN PATENT SPECIFICATION

(11) **EP 3 670 402 B1**
(45) Date of publication and mention of the grant of the patent: **28.02.2024**
(21) Application number: 18290142.1
(22) Date of filing: 20.12.2018
(51) Int. Cl.: B65G 47/88

(54) **STOPPER FOR TRANSPORTATION SYSTEM, CONVEYOR, TROLLEY, AND TRANSPORTATION SYSTEM**
STOPPER FÜR TRANSPORTSYSTEM, FÖRDERER, WAGEN UND TRANSPORTSYSTEM
BUTOIR POUR SYSTÈME DE TRANSPORT, CONVOYEUR, CHARIOT ET SYSTÈME DE TRANSPORT

(43) Date of publication of application: 24.06.2020
(73) Proprietor: Interroll Holding AG, 6592 Sant' Antonino (CH)
(72) Inventor: Loizeau, Antoine, 85110 Saint Germain de Princay (FR); Laplace, Jean-Michel, 85006 La Roche-sur-Yon (FR)
(74) Representative: Kohlhof, Stephan

(56) References cited:
- EP-A1- 2 543 613
- US-A1- 2014 116 838

## Description

### Technical Field

The following description relates a stopper for a transportation system, a conveyor, a trolley, and a transportation system.

### Background

Conveyors comprising a plurality of rollers are commonly used for transporting loads. The rollers determine a track on which the loads, such as pallets, are transported towards a discharge end of the conveyor, where the loads are unloaded by e.g. a forklift operator.

WO 2017/032456 A1 discloses a conveyor for conveying loads along a conveying direction. The conveyor comprises a frame, and a plurality of rollers mounted in the frame.

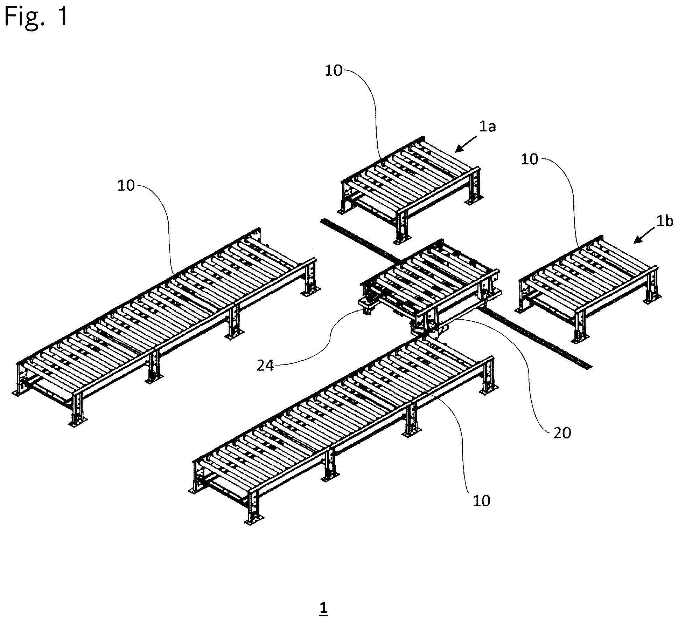

The applicant has further developed a transportation system as shown in Figs. 1 to 3. The transportation system 1 includes e.g. two conveyor tracks 1a, 1b. Each conveyor track 1a, 1b includes a plurality of conveyors 10. Each conveyor 10 includes a plurality of rollers which are arranged in a conveyor frame.

The transportation system 1 also includes a trolley 20 which includes a plurality of rollers arranged in a trolley frame. The trolley 20 has a wheel 24 rotatable in a direction substantially perpendicular to a direction in which the conveyor tracks 1a, 1b convey loads. The trolley 20 is configured to be movable between the conveyor tracks 1a, 1b.

In particular, the trolley 20 is configured to fit between the two conveyors 10 of either the conveyor track 1a or the conveyor track 1b. The trolley 20 is adapted to move in a direction perpendicular to the conveying direction of the conveyor tracks 1a, 1b and thus can be moved to a position between the two conveyors 10.

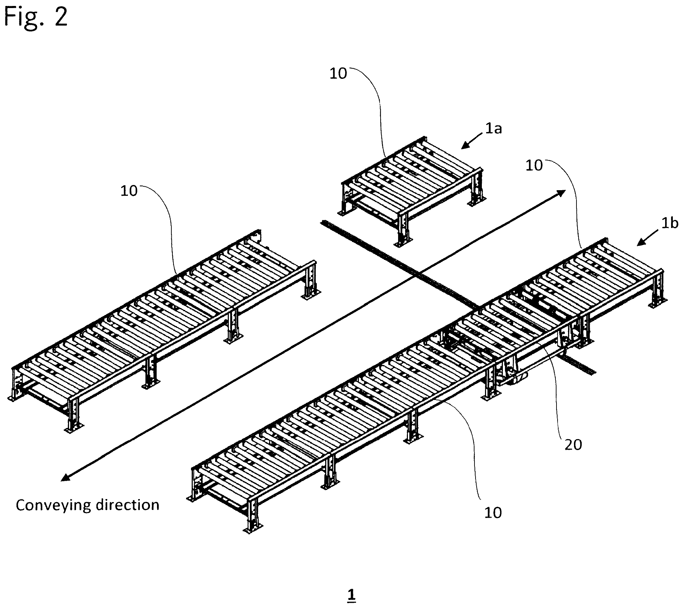

The conveyor track 1a or the conveyor track 1b is completed when the trolley 20 is located between the two conveyors 10 to fill the gap between the two conveyors 10. Thus, as shown in Fig. 2, when the trolley 20 is located between the two conveyors 10 of the conveyor track 1 b to fill the gap between the two conveyors 10 of the conveyor track 1 b, the loads can be conveyed on the conveyor track 1b.

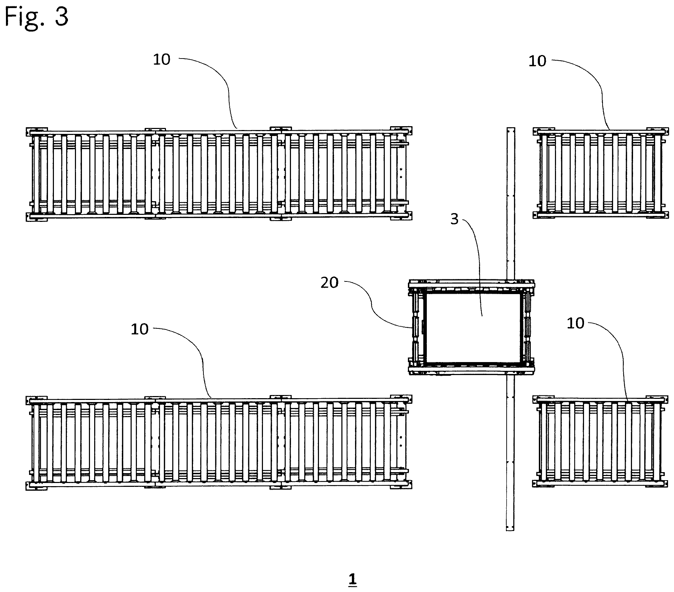

As shown in Fig. 3, a load 3 on the trolley may be moved together with the trolley 20 between the conveyor tracks 1a, 1b. Therefore, the path to convey the load 3 can be changed between the two conveyor tracks 1 a, 1b.

EP 2 543 613 A1 discloses a flow rack which has control tab for moving a charge carrier from one position to another position. A stopper has a stop element that is mechanically coupled with the control tab over a locking element.

During examination of the present patent the examining authority came to the conclusion that EP 2 543 613 A1 discloses all features of the preamble of claim 1 as granted.

### Summary of invention

When the trolley moves away from the conveyor track and there is a gap in the conveyor track, loads may fall off a conveyor. A load on the trolley may also fall off the trolley during the shift of the trolley from one conveyor track to the other conveyor track.

It is an object of the invention to prevent a load from falling off a transportation system.

This object is solved by a stopper as defined in claim 1. Preferred embodiments are subject of the dependent claims.

According to one aspect of the invention, a stopper for a transportation system is defined in claim 1.

According to the above stopper, the stop element is unlocked when the push rod is at the unlock position so that the load can be conveyed by the transportation system. On the other hand, the stop element is locked by the lock lever when the push rod is at the lock position so that, when the load contacts with the stop element, the load is stopped by the stop element. Hence, the load is prevented from falling off the transportation system.

Particularly, the stopper further includes a biasing member configured to bias the push rod to be at the lock position. According to the above stopper, the stop element is biased to be locked. According to the invention, the stop element has a slit or opening configured to support the pin movably along the slit.

According to the above stopper, the pin is guided so as not to be removed from the stop element.

Further particularly, the lock lever has an inclined surface connected to the seat, and configured to guide the pin toward the seat.

According to the above stopper, the pin is engaged with the seat of the lock lever to lock the stop element, unless the push rod is at the unlock position.

Further particularly, the cam is configured to stop moving the pin when the push rod is at the unlock position.

According to the above stopper, the length of the movement of the push rod does not affect the unlock operation after the push rod reaches at the unlock position.

Further particularly, the cam has an unlock portion extending in a circumferential direction and configured to contact with the pin when the push rod is at the unlock position. The distance between the unlock portion and a pivot axis of the cam is substantially constant.

According to the above stopper, the cam can be pivoted without moving the pin after the push rod reaches at the unlock position.

Further particularly, the cam has a lock portion configured to face to the pin when the push rod is at the lock position.

According to the above stopper, the pin is moved to the lock portion from the unlock portion so that the pin is engaged with the seat of the lock lever.

Further particularly, the cam is configured to stop pivoting when the push rod is at the unlock position.

According to the above stopper, the pivot of the cam is stopped so as not to move the pin after the push rod reaches at the unlock position.

Further particularly, the cam has a gap configured to engage with the push rod. The gap is configured to disengage from the push rod when the push rod is at the unlock position.

According to the above stopper, the push rod can be moved with respect to the cam after the push rod reaches at the unlock position.

Further particularly, the seat is configured to engage with the pin in one of pivoting directions of the stop element. The seat is configured to disengage from the pin in the other direction of the pivoting directions of the stop element.

According to the above stopper, the stop element stops the load only in one direction, and does not stop the load in the other direction.

According to an another aspect of the invention, a conveyor for conveying a load includes the above stopper.

According to an another aspect of the invention, a trolley for conveying a load includes a wheel rotatable in a direction different from a direction conveying the load, and the above stopper.

According to an another aspect of the invention, a transportation system includes the above conveyor and the above trolley.

Particularly, the trolley has a ramp configured to contact with the push rod of the conveyor.

According to the above transportation system, the stop element of the conveyor is locked or unlocked based on the position of the trolley.

Further particularly, the transportation system further includes a bump configured to contact with the push rod of the trolley or the conveyor.

According to the above transportation system, the stop element of the trolley is locked or unlocked based on the position of the trolley, or the stop element of the conveyor is locked or unlocked based on the position of the bump.

### Brief Description of Drawings

Fig. 1 shows a transportation system including a trolley movable between two conveyor tracks.
Fig. 2 shows the trolley aligned with one of the conveyor tracks.
Fig. 3 shows a load moving together with the trolley.
Fig. 4 shows a transportation system having stoppers provided on the conveyor and the trolley.
Fig. 5 shows a side view of the conveyor.
Fig. 6 shows the A-A sectional view of Fig. 5 or Fig. 16.
Fig. 7 shows a stop element of a stopper.
Fig. 8 shows a sectional view of the stopper.
Fig. 9 shows the stop element.
Fig. 10 shows a pin of the stopper.
Fig. 11 shows a lock lever of the stopper.
Fig. 12 shows a cam of the stopper.
Fig. 13 shows a load moving onto the conveyor.
Fig. 14 shows the stopper in an unlock state.
Fig. 15 shows the stopper in the unlock state.
Fig. 16 shows a top view of the conveyor and the load.
Fig. 17 shows a top view of the transportation system.
Fig. 18 shows a top view of the trolley.
Fig. 19 shows a perspective view of the trolley.
Fig. 20 shows a trolley fitted in one of conveyor tracks.
Fig. 21 shows a trolley apart from the conveyor tracks
Fig. 22 shows the B-B sectional view of Fig. 18.
Fig. 23 shows bumps included in the transportation system.
Fig. 24 shows another example of bumps included in the transportation system.
Fig. 25 shows another example of bumps included in the transportation system.
Fig. 26 shows a stopper according to the second embodiment.
Fig. 27 shows a lock lever of the second embodiment.
Fig. 28 shows a cam of the second embodiment.
Fig. 29 shows a sectional view of the stopper of the second embodiment in an unlocked state.
Fig. 30 shows the stopper of the second embodiment in which a push rod is disengaged from the cam.
Fig. 31 shows a transportation system according to the third embodiment.
Fig. 32 shows a side view of a conveyor of the transportation system of the third embodiment.
Fig. 33 shows the first and second push rod of a stopper according to the third embodiment.
Fig. 34 shows a top view of the trolley apart from the conveyor.
Fig. 35 shows the C-C sectional of Fig. 34.
Fig. 36 shows a sectional view of the stopper of the third embodiment in a locked state.
Fig. 37 shows the aligned trolley and conveyor.

### Detailed Description

Referring to Figs. 1 to 3, a transportation system 1, which has one or more stoppers according to the present invention, includes one or more, particularly two conveyor tracks 1a, 1b. Each conveyor track 1a, 1b includes one or more conveyors 10. Each conveyor 10 includes a plurality of rollers which are arranged in a conveyor frame.

The transportation system 1 also includes a trolley 20 which includes a plurality of rollers arranged in a trolley frame. The trolley 20 has a wheel 24 rotatable in a direction different from a direction conveying a load. Particularly, the wheel 24 is rotatable in a direction substantially perpendicular to a direction in which the conveyor tracks 1a, 1b convey loads. The trolley 20 is configured to be movable between the conveyor tracks 1a, 1b particularly along a rail fixed on a floor.

In particular, the trolley 20 is configured to fit between the two conveyors 10 of either the conveyor track 1a or the conveyor track 1b. The trolley 20 is adapted to move in a direction substantially perpendicular to the conveying direction of the conveyor tracks 1a, 1b and thus, can be moved to a position between the two conveyors 10.

The conveyor track 1a or the conveyor track 1b is completed when the trolley 20 is located between the two conveyors 10 to fill the gap between the two conveyors 10. Thus, as shown in Fig. 2, when the trolley 20 is located between the two conveyors 10 of the conveyor track 1b to fill the gap between the two conveyors 10 of the conveyor track 1b, the loads can be conveyed on the conveyor track 1b. Similarly, when the trolley 20 fills the gap between the two conveyors 10 of the conveyor track 1a, the loads can be conveyed on the conveyor track 1a.

As shown in Fig. 3, a load 3 on the trolley may be moved together with the trolley 20 between the conveyor tracks 1a, 1b. Therefore, the path to convey the load 3 can be changed between the two conveyor tracks 1a, 1b.

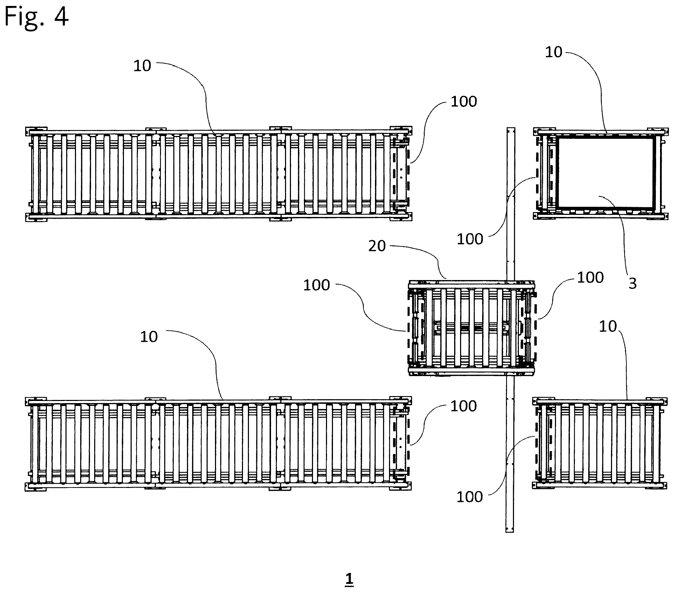

Referring to Fig. 4, the transporting system 1 has one or more stoppers 100. Particularly, one stopper 100 is provided at one of the ends of the each conveyor 10 in the conveying direction. Stoppers 100 may be provided at both ends of the each conveyor 10 in the conveying direction.

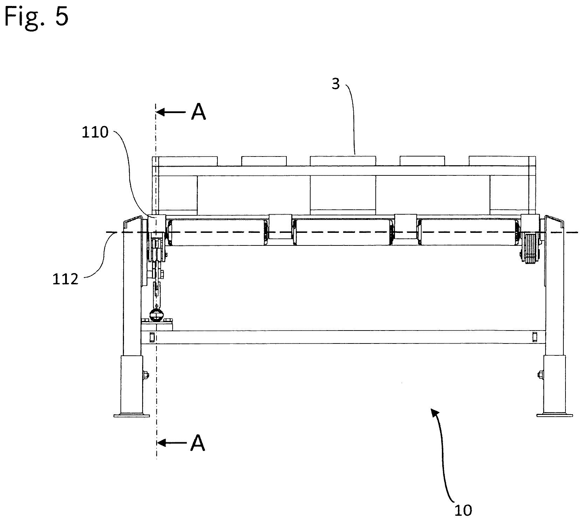

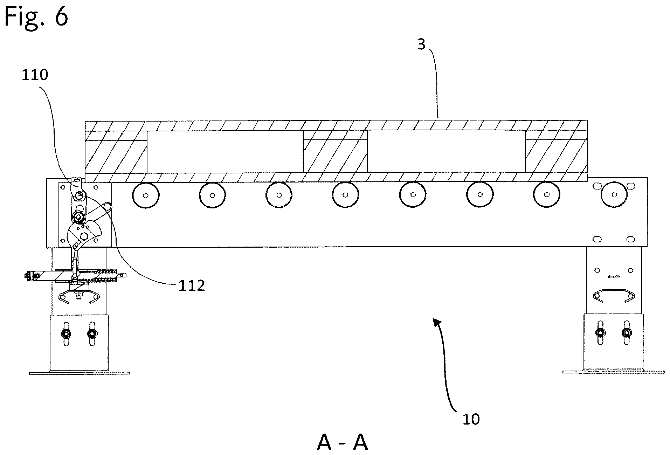

Stoppers 100 are also provided at both ends of the trolley 20 in the conveying direction. One stopper 100 may be is provided at one of the ends of the trolley 20 in the conveying direction. Referring Figs. 5 and 6, the stopper 100, particularly the stopper 100 of the conveyor 10, includes a stop element 110 configured to contact with the load 3. The stop element 110 is particularly provided at one end of the conveyor 10 or the trolley 20 in the width direction orthogonal to the conveying direction.

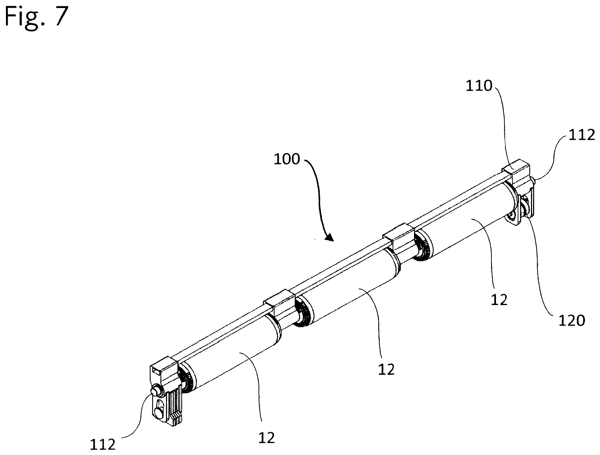

The stop element 110 is supported, by the frame of the conveyor 10, to be capable of pivoting around an axis 112. The axis 112 may be identical to an axis of one or more rollers 12 provided at the end of the conveyor 10, as shown particularly in Fig. 7.

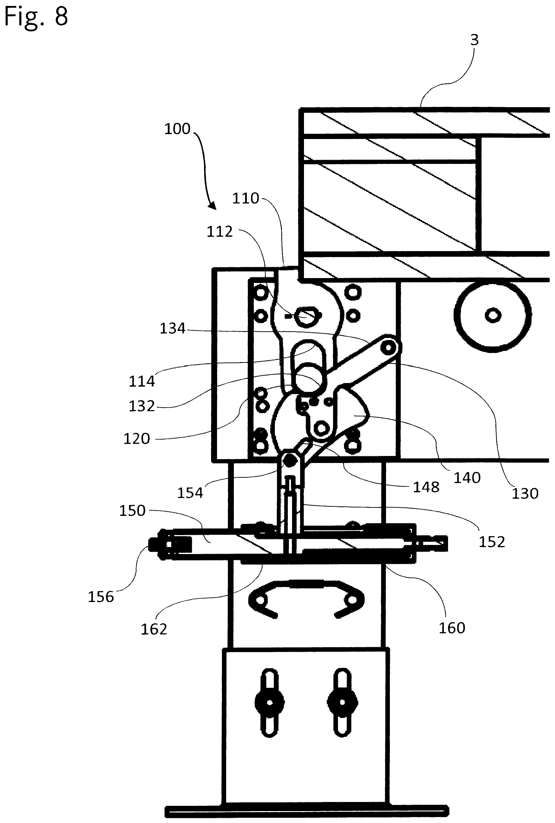

Referring Fig. 8, the stopper 100 further has a pin 120, a lock lever 130, a cam 140, a push rod 150, and a biasing member 160.

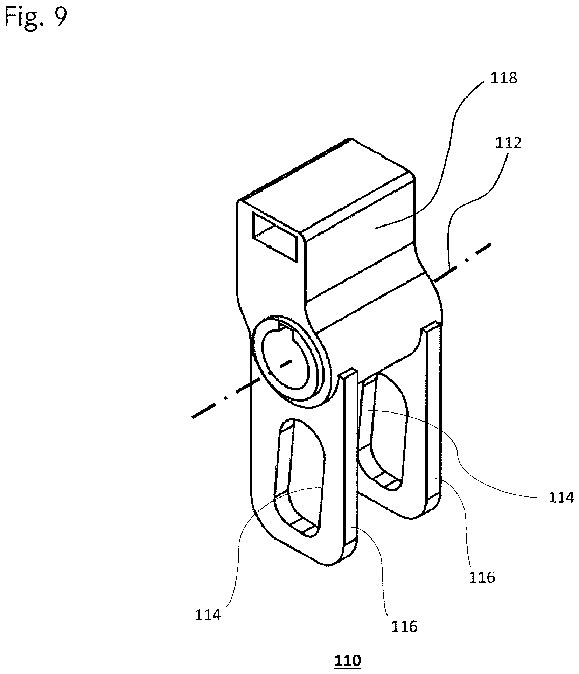

The pin 120 is movably supported by the stop element 110. The stop element 110 has a slit or opening 114 configured to support the pin 120 movably along the opening 114. Referring to Fig. 9, the stop element 110 has one or more, particularly a pair of support portions 116. The support portions 116 are configured to extend radially from the axis 112. The support portions 116 are substantially planer to extend perpendicularly to the axis 112. The opening 114 is formed in each support portion 116. The opening 114 has a elongate shape.

The stop element 110 further has a contact portion 118. The contact portion 118 is formed to extend radially in a direction substantially opposite to the direction in which the support portions 116 extend. The contact portion 118 is configured to contact with the load 3 on the conveyor 10 or the trolley 20. In other words, the contact portion 118 is formed to extend beyond the outer surface of the rollers 12 of the conveyor 10 or the trolley 20.

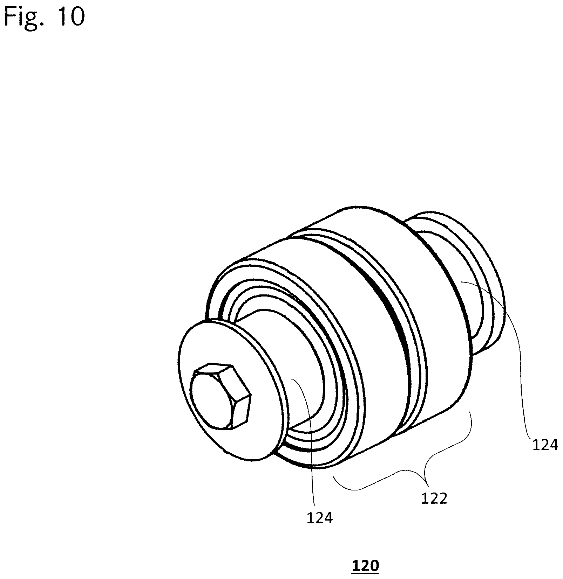

Referring to Fig. 10, the pin 120 particularly has a bearing 122. The pin 120, i.e., the bearing 122, has substantially circular outer surface. The bearing 122 may be a ball-bearing. The pin 120 further has one or more, particularly a pair of extensions 124. The extensions 124 is configured to extend in an axial direction of the bearing 122. The diameter of the extensions 124 is less than the diameter of the bearing 122.

The extensions 124 are inserted into the slits 114 of the stop element 110. The diameter of the extensions 124 is slightly less than the width of the opening 114 of the stop element 110 so that the pin 120 is supported by the stop element 110 movably along the opening 114.

On the other hand, the diameter of the bearing 122 is greater than the width of the opening 114 of the stop element 110 so as not to fall of the stop element 110.

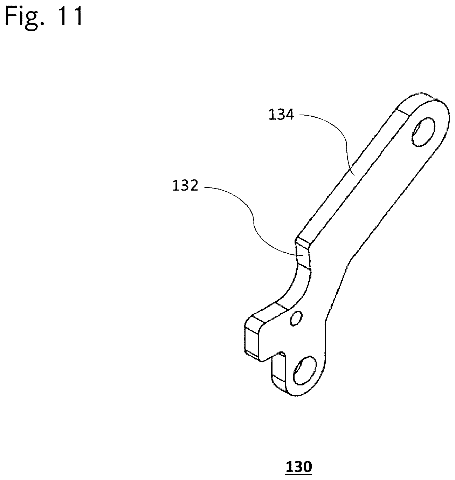

Referring to Fig. 11, the lock lever 130 has a seat 132 configured to engage with the pin 120, particularly the bearing 122. The seat 132 has substantially L-shape. The seat 132 is configured to engage with the pin 120 in one of pivoting directions of the stop element 110. The seat 132 is configured to disengage from the pin 120 in the other direction of the pivoting directions of the stop element 110.

Particularly, the seat 132 is configured to engage with the pin 120 in a pivoting direction of the stop element 110 contacted with a load 3 moving outwardly (i.e., from right to left when looking at Fig. 8) from the conveyor 10 or the trolley 20. On the other hand, the seat 132 is configured to disengage from the pin 120 in a direction of a pivoting direction of the stop element 110 contacted with a load 3 moving onto (i.e., from left to right when looking at Fig. 8) the conveyor 10 or the trolley 20.

The lock lever 130 further has an inclined surface 134 connected to the seat 132. The inclined surface 134 may be the upper surface of the lock lever 130. The inclined surface 134 is configured to guide the pin 120, particularly the bearing 122, toward the seat 132. In other words, the pin 120 is movable along the inclined surface 134.

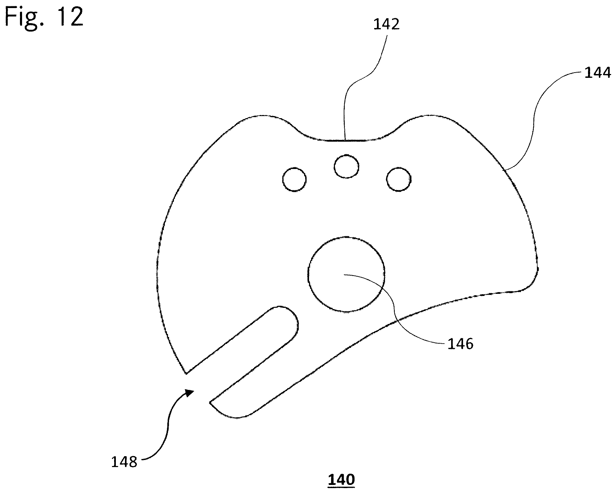

Referring to Fig. 12, the cam 140 is configured to move the pin 120. Particularly, the cam 140 is supported by the frame of the conveyor 10 or the trolley 20 to be capable of pivoting around a pivot axis 146. The cam 140 further has a lock portion 142 and an unlock portion 144.

The lock portion 142 is a concave portion of the outer surface of the cam 140. The unlock portion 144 is configured to extend in a circumferential direction of the outer surface of the cam 140. The unlock portion 144 is configured to extend outward with respect to the lock portion 142.

The lock portion 142 is configured to face to the pin 120, particularly the bearing 122, when the cam is pivoted so that the lock portion 142 is located substantially above the pivot axis 146. The pin 120 is capable of engaging with the seat 132 of the lock lever 130 when the pin 120 face to the lock portion 142.

The unlock portion 144 is configured to contact with the pin 120, particularly the bearing 122, when the cam is pivoted so that the unlock portion 144 is located substantially above the pivot axis 146. As the pin 120 moves toward the unlock portion 144 from the lock portion 142, with respect to the cam 140, along the outer surface of the cam 140, the pin 120 is moved upward along the opening 114 of the stop element 110. The cam 140 is capable of disengaging from the seat 132 of the lock lever 130 when the pin 120 contacts with the unlock portion 144.

Particularly, the distance between the unlock portion 144 and the pivot axis 146 of the cam 140 is substantially constant. Therefore, when the pin 120 contacts with the unlock portion 144, the cam 140 stops moving the pin 120 so that the position of the pin 120 is maintained when the cam 140 is further pivoted, unless the pin 120 contacts with the lock portion 142.

The cam 140 further has a slit 148 to be engaged with the push rod 150. The cam 140 is pivoted when the push rod 150 is moved. Particularly, the cam 140 is configured to disengage the pin 120 from the seat 132 when the push rod 150 is at an unlock position. The cam 140 is further configured to engage the pin 120 with the seat 132 when the push rod 150 is at a lock position.

Particularly, the unlock portion 144 of the cam 140 is configured to contact with the pin 120, particularly the bearing 122, when the push rod 150 is at the unlock position. In other word, the cam 140 is configured to stop moving the pin 12 when the push rod 150 is at the unlock position. The lock portion 142 of the cam 140 is configured to face to the pin 120, particularly the bearing 122, when the push rod 150 is at the lock position.

Referring to Fig. 8, the push rod 150 is connected to the cam 140 so that the cam 140 is pivoted when the push rod 150 is moved. The push rod 150 is provided with a connecting rod 152 protruding upward from the push rod 150. The connecting rod 152 has a connecting pin 154 at one end of the connecting rod 152. The other end of the connecting rod 152 is inserted into the push rod 150 in the axial direction of the push rod 150.

The connecting pin 154 is provided so as to protrude from the connecting rod 152 and be inserted into the slit 148 of the cam 140. The diameter of the connecting pin 154 is substantially identical to, or slightly less than, the width of the slit 148 so that the connecting pin 154 is movable along the slit 148.

The push rod 150 may further has a roller 156 on one end of the push rod 150. The roller 156 is supported to be rotatable around an axis oriented in the vertical=direction. In the case of the stopper 100 provided on the conveyor 10, the roller 156 is configured to contact particularly with the trolley 20.

The push rod 150 is movably supported by a support cylinder 162. The support cylinder 162 is fixed particularly on the frame of the conveyor 10 or the trolley 20. The push rod 150 is adapted to be movable in a horizontal or vertical direction. In the embodiment as shown in Fig. 8, the push rod 150 is adapted to be movable in the horizontal direction. The push rod 150 is further adapted to be movable between the lock position and the unlock position. In Fig. 8, the push rod 150 is at the lock position.

The support cylinder 162 has a slit on the top of the support cylinder 162. The slit of the support cylinder 162 is configured to extend in an axial direction of the support cylinder 162. The connecting rod 152 of the push rod 150 extends upward beyond the slit of the support cylinder 162. The connecting rod 152 of the push rod 150 is movable along the slit of the support cylinder 162.

The biasing member 160 is particularly a coil spring provided around the push rod 150 in the support cylinder 162. The biasing member 160 is configured to bias the push rod 150 to be at the lock position.

As shown in Fig. 8, the cam 140 is configured to engage the pin 120 with the seat 132 of the lock lever 130 when the push rod 150 is at the lock position. In this state, the stop element 110 is locked by the lock lever 130 in a direction that the load 3 is conveyed outward from the conveyor 10 or the trolley 20. When the load 3 moving outward contacts the stop element 110, the stop element 110 is prevented from pivoting by the lock lever 130. Therefore, the load 3 can be stopped by the stop element 110 so that the load 3 remains on the conveyor 10 or the trolley 20.

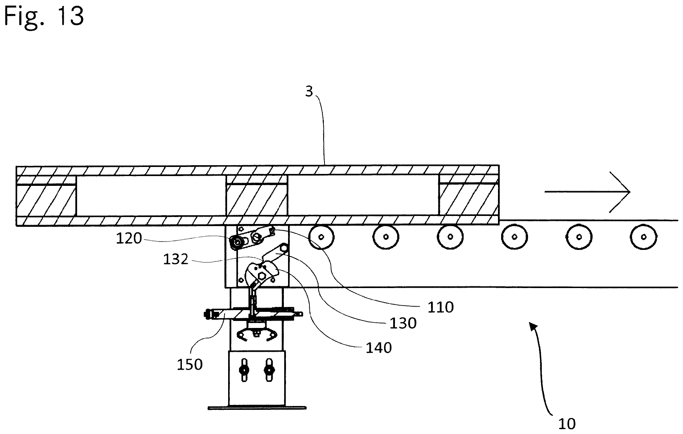

Referring to Fig. 13, as described above, the seat 132 is configured to engage with the pin 120 only in one pivoting direction. Particularly, the seat 132 is configured to disengage from the pin 120 in the pivoting direction of the stop element 110 contacted with the load 3 moving inward (i.e., from left to right when looking at Fig. 13) onto the conveyor 10 or the trolley 20.

As shown in Fig. 13, the stop element 110 can be pivoted so as not to stop the load 3 moving onto (i.e., from left to right when looking at Fig. 13) the conveyor 10 or the trolley 20 when the push rod 150 is at the lock position. In other words, the stop element 110 can be pivoted so as not to stop the load 3 moving onto the conveyor 10 or the trolley 20 (i.e., from left to right when looking at Fig. 13), irrespectively of the position of the push rod 150.

In other words, the stop element 110 is configured to have no stop function with respect to the load 3 in the direction from left to right when looking at Fig. 13. The stop element 110 is configured to have a stop function with respect to the load 3 only in the direction from right to left when looking at Fig. 13.

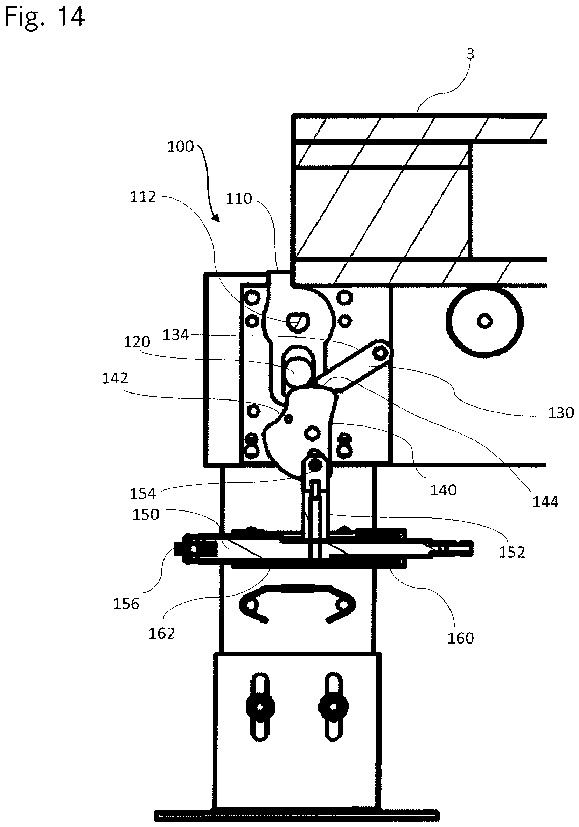

Referring to Fig. 14, the cam 140 is further configured to disengage the pin 120, by the unlock portion 144, from the seat 132 of the lock lever 130 when the push rod 150 is at the unlock position. As described above, the unlock portion 144 of the cam 140 is configured to maintain the position of the pin 120 after disengage the pin 120 from the seat 132 of the lock lever 130. Therefore, even if the push rod 150 is further moved from the position as shown in Fig. 14 and the cam 140 is further pivoted, the position of the pin 120 particularly in the vertical direction does not change. Since the cam 140 does not move the pin 120 after the push rod 150 reaches at the unlock position, the length of the movement of the push rod 150 does not affect the unlock operation after the push rod 150 reaches at the unlock position. This improves the flexibility of a gap between the conveyor 10 and the trolley 20. For example, the transportation system 1 can be designed to arrange the trolley 20 closer to the conveyor 10 without changing the stopper 100, particularly the length of the push rod 150.

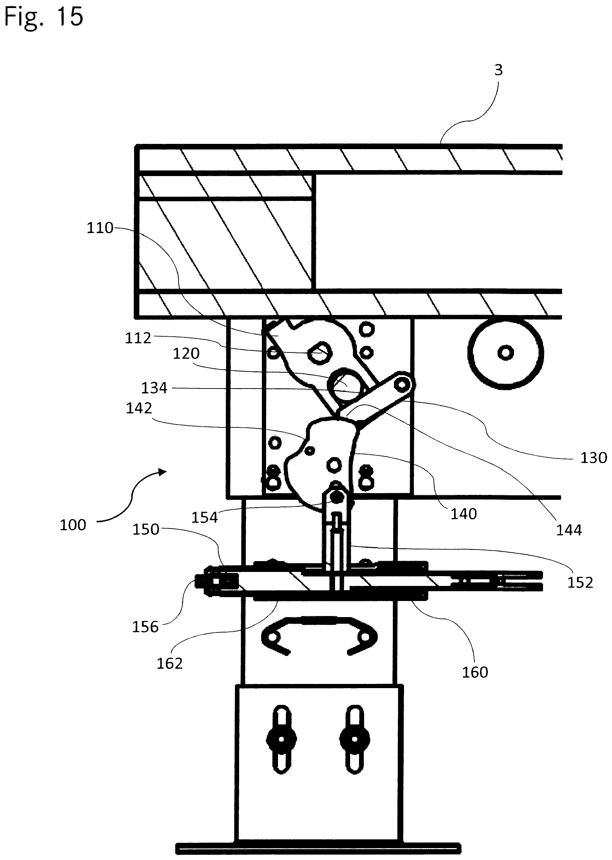

When the pin 120 is disengaged from the seat 132 of the lock lever 130, the stop element 110 is unlocked so as not to be prevented from pivoting in any directions. When the load 3 moving outward contacts the stop element 110, the stop element 110 is pivoted, as shown in Fig. 15. Therefore, the load 3 can further move outward from the conveyor 10 or the trolley 20.

When the stop element 110 contacts with the load 3 and is pivoted as shown in Fig. 15, the pin 120 is moved onto the inclined surface 134 of the lock lever 130. The pin 120 is moved upward along the inclined surface 134 when the stop element 110 is pivoted by contacting with the load 3 moving outward from the conveyor 10 or the trolley 20.

After the load 3 passes beyond the stop element 110, the pin 120 is moved downward along the inclined surface 134 so that the stop element 110 is returned to the state as shown in Fig. 14 so that the contact portion 118 of the stop element 110 located at the top of the stop element 110. In other words, when the stop element 110 receives no force from the load 3, the stop element 110 keeps the state as shown in Fig. 14 mainly due to the weights of the stop element 110 and the pin 120.

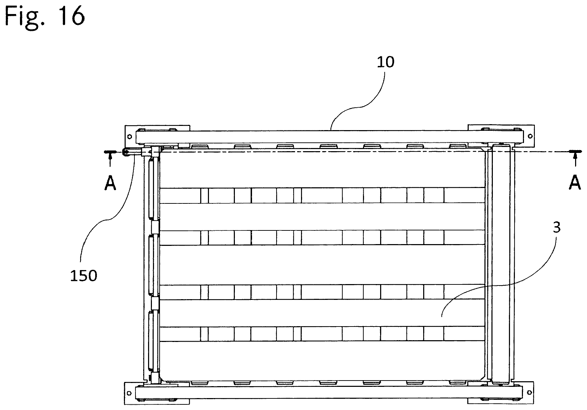

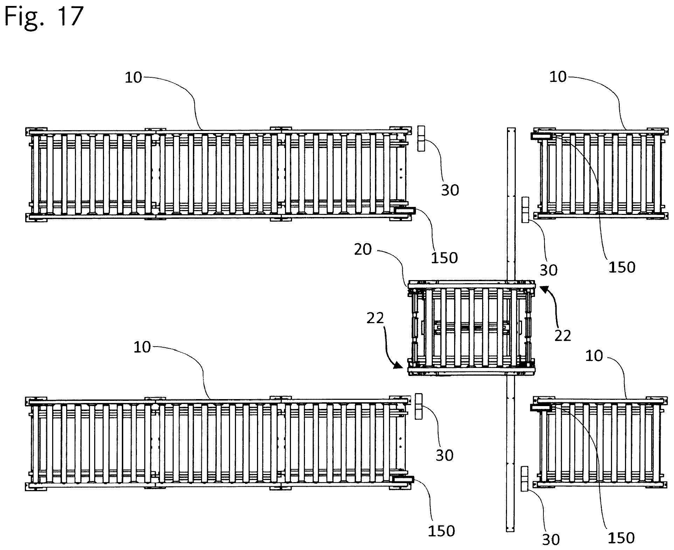

Referring to Figs. 16 and 17, in each conveyor 10, the push rod 150 is particularly provided at one end of the conveyor 10 in the width direction orthogonal to the conveying direction. The push rod 150 is arranged to be pushed by the trolley 20. Particularly, when the trolley 20 is aligned with the conveyor 10, the push rod 150 is pushed to be at the unlock position. On the other hand, when the trolley 20 is apart from the conveyor 10, the push rod 150 is returned to be at the lock position by the biasing member 160.

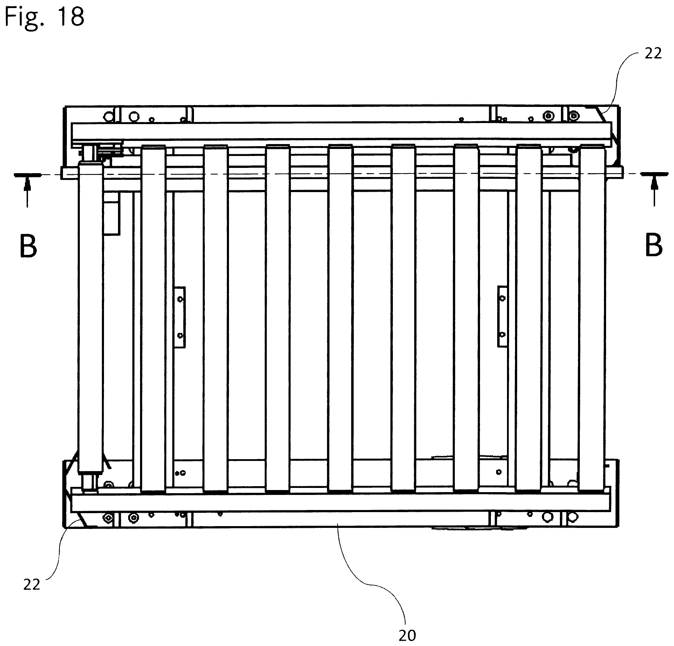

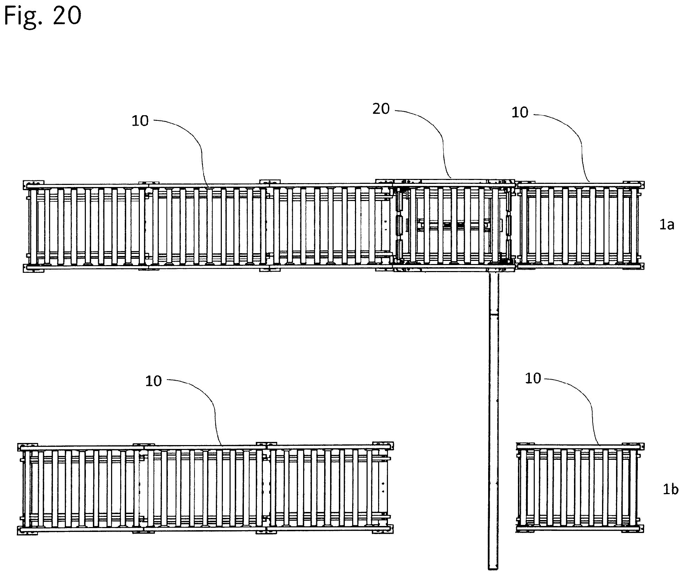

Referring to Figs. 17 to 19, the trolley 20 has a ramp 22 configured to contact with the push rod 150 of the conveyor 10. In particular, the ramp 22 configured to contact with the push rod 150 of the conveyor 10 so that the push rod 150 is at the unlock position, when the trolley 20 is aligned with the conveyor 10 as shown in Fig. 20. The ramp 22 has slopes or inclined surfaces at both of the ends in the movable direction of the trolley 20 so that the ramp 22 can smoothly contact with the push rod 150, particularly the roller 156, of the conveyor 10.

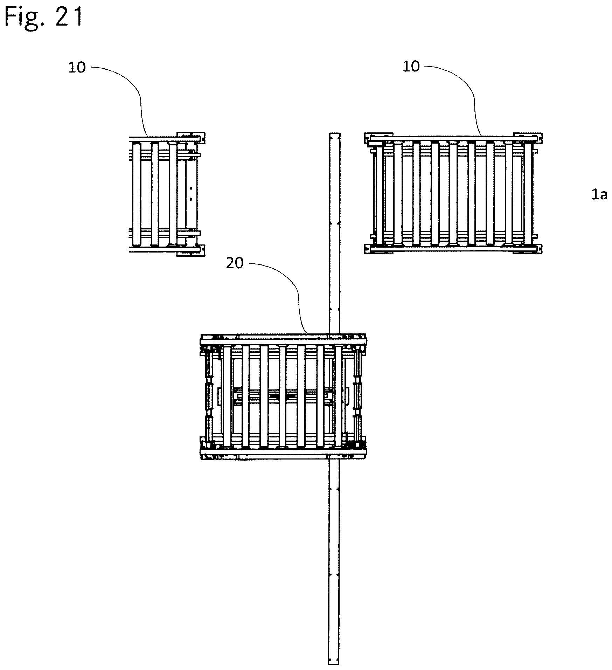

On the other hand, as shown in Fig. 21, when the trolley 20 is moved away from the conveyor 10, the ramp 22 is apart from the push rod 150 so that the push rod 150 of the conveyor 10 is returned to be at the lock position by the biasing member 160.

The trolley 20 may have the stopper 100 similarly to the conveyor 10, and the conveyor 10 may have the ramp 22 similarly to the trolley 20.

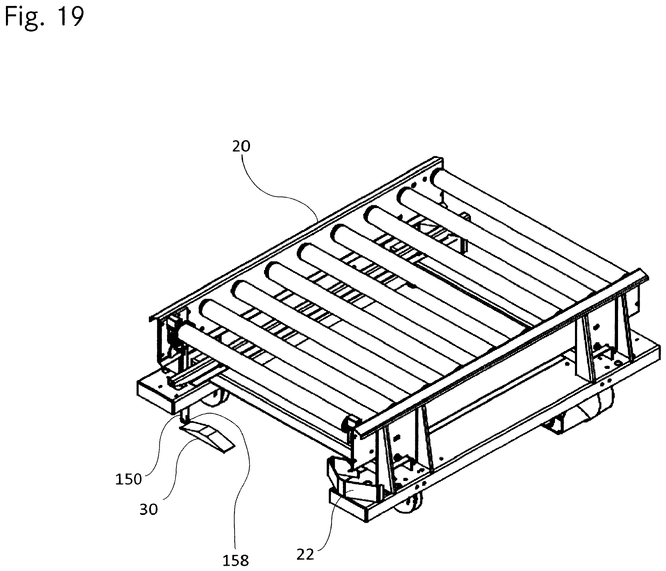

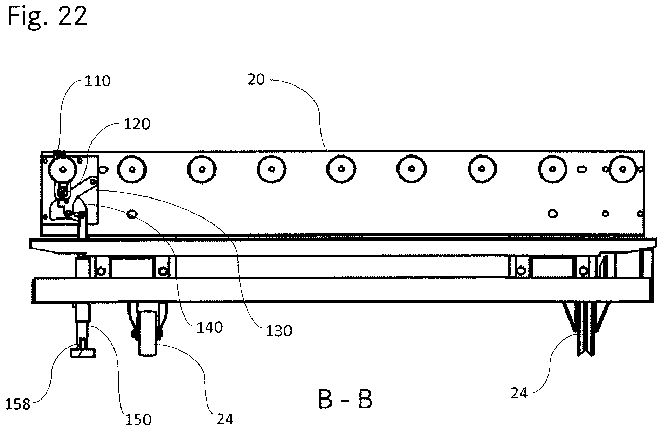

Alternatively, referring to Fig. 19 as well as Fig. 22, the push rod 150 of the trolley 20 is adapted to be movable particularly in the vertical direction. The push rod 150 may be connected to the cam 140 directly without the connecting rod 152. The push rod 150 of the trolley 20 may have a roller 158 on one end of the push rod 150. The roller 158 is supported to be rotatable around an axis oriented in the horizontal direction. Particularly the roller 158 of the push rod 150 of the trolley 20 is rotatable in the direction substantially perpendicular to the direction in which the conveyor tracks 1a, 1b convey loads, similarly to the wheel 24.

The push rod 150 of the trolley 20 is configured to be pushed by a bump 30 on a floor or the frame of the conveyor 10. The bump 30 is configured to contact with the push rod 150 of the trolley 20. The bump 30 has slopes or inclined surfaces at both of the ends in the movable direction of the trolley 20 so that the bump 30 can smoothly contact with the push rod 150, particularly the roller 158, of the trolley 20.

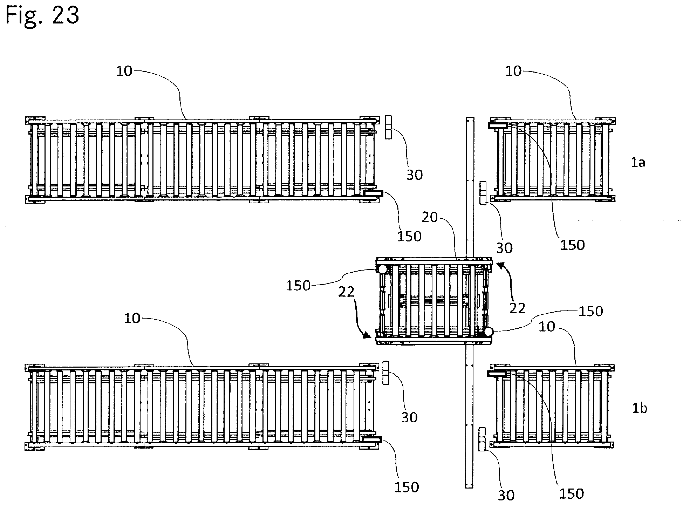

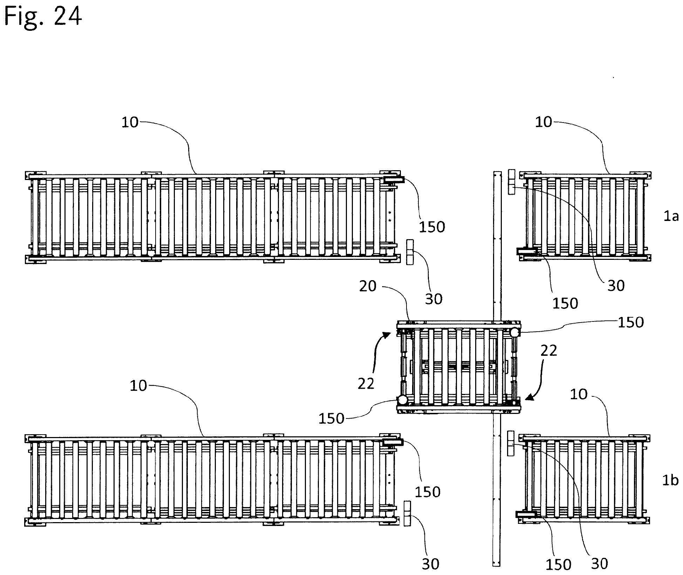

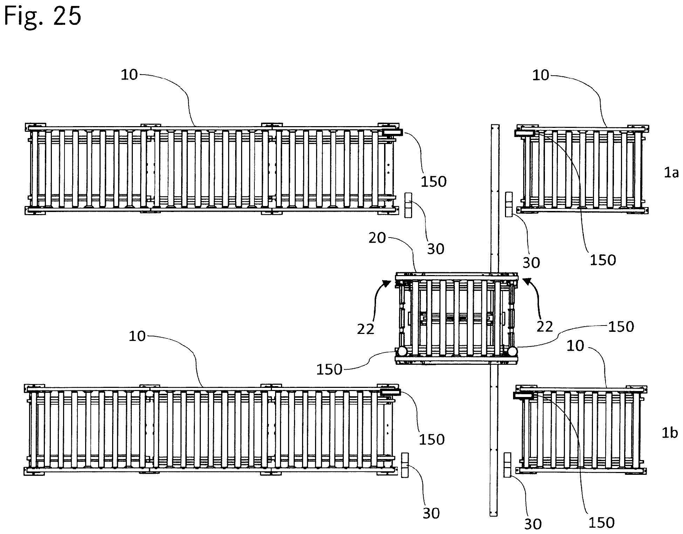

As shown Figs. 23 or 24, the push rods 150 of the trolley 20 are particularly provided at both of the ends of the trolley 20 in the conveying direction. The push rods 150 of the trolley 20 are particularly provided at both of the ends of the trolley 20 in the width direction orthogonal to the conveying direction. As shown Fig. 25, the push rods 150 of the trolley 20 may be provided at one end of the trolley 20 in the width direction orthogonal to the conveying direction.

The bumps 30 are respectively arranged to push the push rods 150 of the trolley 20. Particularly, when the trolley 20 is aligned with the conveyor 10 as shown in Fig. 20, the push rod 150 is pushed upward in the vertical direction, respectively, by the bump 30 to be at the unlock position. On the other hand, when the trolley 20 is apart from the conveyor 10 as shown in Fig. 21, the push rod 150 of the trolley 20 is returned to be at the lock position by the biasing member 160.

When the trolley 20 is aligned with the conveyor 10, the lock elements 110 of the trolley 20 are unlocked similarly to the lock element 110 of the conveyor 10. Therefore, the load 3 on the trolley 20 is not stopped by the lock elements 110 of the trolley 20.

When the trolley 20 is apart from the conveyor 10, the lock elements 110 of the trolley 20 are locked similarly to the lock element 110 of the conveyor 10. Therefore, the load 3 on the trolley 20 is stopped by the lock elements 110 of the trolley 20.

### Second embodiment

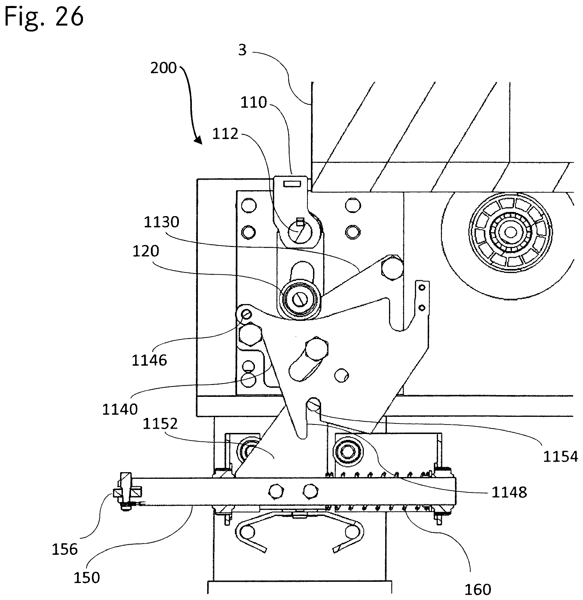

Referring to Fig. 26, the stopper 200 according to the second embodiment is described. The stopper 200 of the second embodiment has, similarly to the stopper 100 of the first embodiment, the stop element 110, the pin 120 and the push rod 150. The stopper 200 of the second embodiment particularly differs in a lock lever 1130 and a cam 1140.

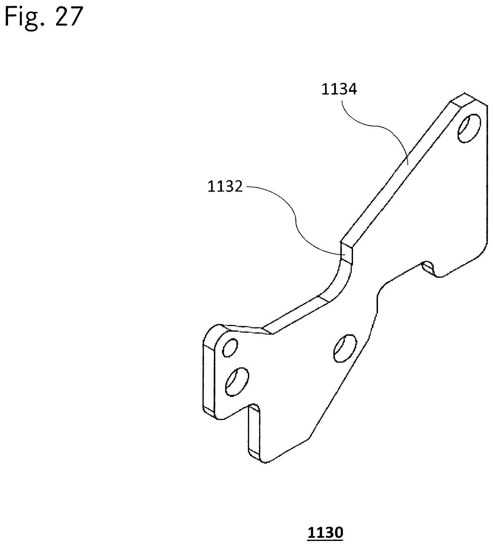

Referring to Fig. 27, the lock lever 1130 of the second embodiment particularly differs in the shape from the first embodiment. The lock lever 1130 of the second embodiment has, similarly to the first embodiment, a seat 1132 and an inclined surface 1134.

The seat 1132 and the inclined surface 1134 of the second embodiment are substantially identical to the seat 132 and the inclined surface 134 of the first embodiment, respectively.

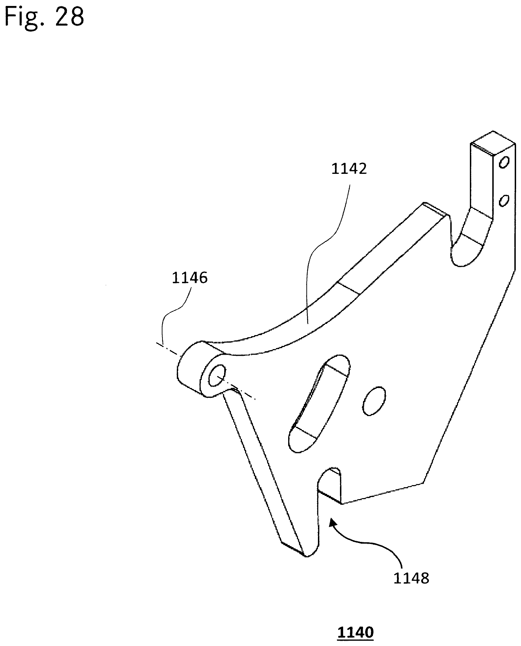

Referring to Fig. 28, the cam 1140 is configured to move the pin 120, and has an upper surface 1142 to be contacted with the pin 120. The cam 1140 is supported by the frame of the conveyor 10 or the trolley 20 to be capable of pivoting around a pivot axis 1146. The pivot axis 1146 is provided particularly at one end of the cam 1140.

The cam 140 further has a gap 1148 to be engaged with the push rod 150. The cam 1140 is pivoted when the push rod 150 is moved. Particularly, the cam 1140 is configured to disengage the pin 120 from the seat 132 when the push rod 150 is at the unlock position. The cam 1140 is further configured to engage the pin 120 with the seat 132 when the push rod 150 is at the lock position.

Referring to Fig. 26 again, the push rod 150 is connected to the cam 1140 so that the cam 1140 is pivoted when the push rod 150 is moved. The push rod 150 is provided with a connecting plate 1152 protruding upward from the push rod 150. The connecting plate 1152 has a connecting pin 1154 at one end of the connecting plate 1152. The other end of the connecting plate 1152 is fixed to the push rod 150.

The connecting pin 1154 is provided so as to protrude from the connecting plate 1152 and be inserted into the gap 1148 of the cam 1140. The diameter of the connecting pin 1154 is substantially identical to, or slightly less than, the width of the gap 1148 so that the connecting pin 1154 is movable along the gap 1148.

Similarly to the first embodiment, the push rod 150 is movably supported by a support member fixed particularly on the frame of the conveyor 10 or the trolley 20. The push rod 150 is adapted to be movable in the horizontal direction between the lock position and the unlock position. In Fig. 26, the push rod 150 is at the lock position. The biasing member 160 is configured to bias the push rod 150 to be at the lock position.

As shown in Fig. 26, the cam 1140 is configured to engage the pin 120 with the seat 1132 of the lock lever 1130 when the push rod 150 is at the lock position. In this state, the stop element 110 is locked by the lock lever 1130 in a direction that the load 3 is conveyed outward from the conveyor 10 or the trolley 20.

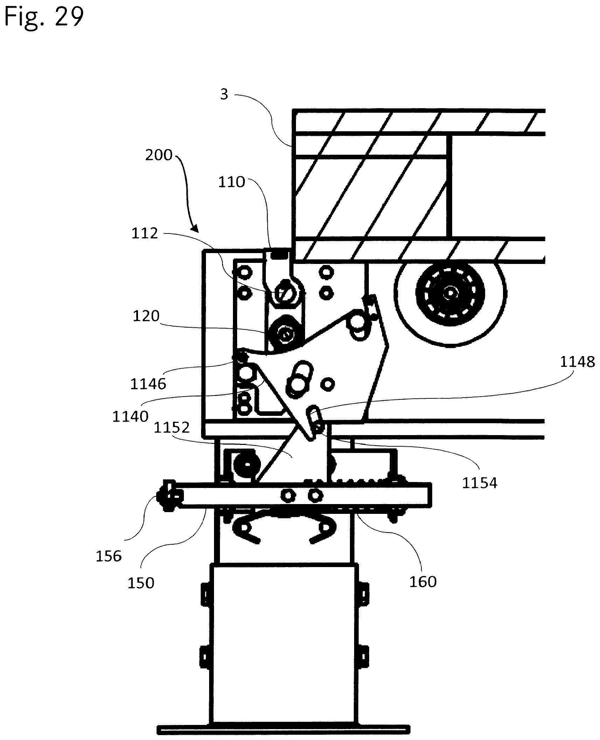

Referring to Fig. 29, the cam 1140 is further configured to disengage the pin 120 from the seat 1132 of the lock lever 1130 when the push rod 150 is at the unlock position. Particularly, the cam 1140 is pivoted to move the pin 120 upward so that the pin 120 is moved outward from the seat 1132 of the lock lever 1130, as the push rod 150 is moved from the lock position to the unlock position.

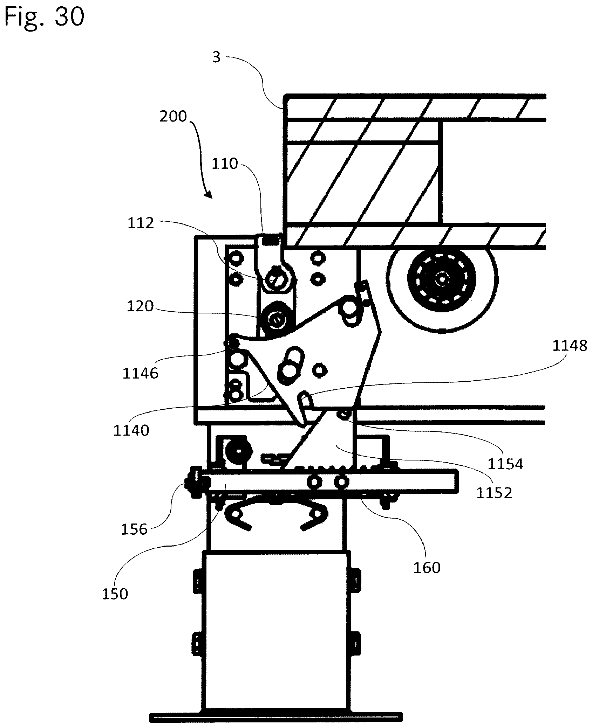

As shown in Figs, 29 and 30, the cam 1140 is configured to stop pivoting when the push rod 150 is at the unlock position. In particular, the gap 1148 of the cam 1140 is configured to disengage from the push rod 150 when the push rod 150 is at the unlock position. Therefore, as shown particularly in Fig. 30, the push rod 150 can be moved with respect to the cam 1140 after the push rod 150 reaches at the unlock position.

Since the cam 1140 stops pivoting, the cam 1140 does not move the pin 120 after the push rod 150 reaches at the unlock position. Therefore, the length of the movement of the push rod 150 does not affect the unlock operation after the push rod reaches at the unlock position.

### Third embodiment

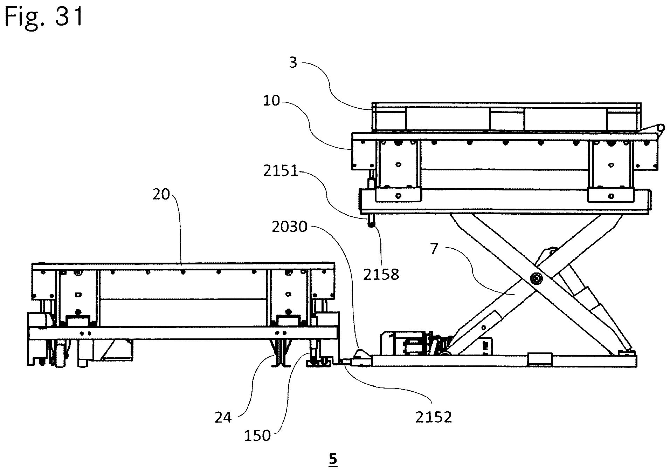

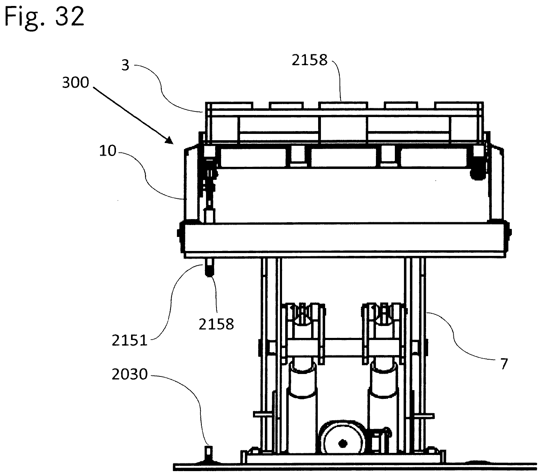

Referring to Figs. 31 and 32, a transportation system 5 according to the third embodiment is described. The transportation system 5 of the third embodiment particularly has a scissor lift system 7 in addition to the components of the transportation system 1 of the first or second embodiment.

The scissor lift system 7 is configured to move the conveyor 10 in the vertical direction. The transportation system 5 may further has a lift system configured to move the trolley 20 in the vertical direction. The scissor lift system 7 is connected to e.g. the frame of the conveyor 10.

As shown in Figs. 31 to 33, the stopper 300 of the conveyor 10 has a first push rod 2151. The stopper 300 of the third embodiment is substantially same as the stopper 100 of the first embodiment or the stopper 200 of the second embodiment, except for the first push rod 2151.

The first push rod 2151 of the stopper 300 of the conveyor 10 is adapted to be movable particularly in the vertical direction. The first push rod 2151 may further has a roller 2158 on one end of the first push rod 2151. The roller 2158 is supported to be rotatable around an axis oriented in the horizontal direction. Particularly the roller 2158 of the first push rod 2151 of the conveyor 10 is rotatable in a direction substantially parallel to the conveying direction in which the conveyor tracks 1a, 1b convey the loads.

The first push rod 2151 of the conveyor 10 is further configured to be pushed by a bump 2030 on a floor or the frame of the conveyor 10. In particular, the first push rod 2151 of the conveyor 10 is configured to be pushed by the bump 2030 to be at the unlock position. On the other hand, the first push rod 2151 of the conveyor 10 is biased to be at the lock position by a biasing member similarly to the push rod 150 of the first embodiment.

When the conveyor 10 is lifted with respect to the trolley 20 by the scissor lift system 7, the first push rod 2151 of the conveyor 10 is apart from the bump 2030 so that the first push rod 2151 of the conveyor 10 is at the lock position. Therefore, when the vertical position of the conveyor 10 and the vertical position of the trolley 20 are different, the stop element 110 is locked by the lock lever 130 in a direction that the load 3 is conveyed outward from the conveyor 10. When the load 3 moving outward contacts the stop element 110, the stop element 110 is prevented from pivoting by the lock lever 130. Therefore, the load 3 can be stopped by the stop element 110 so that the load 3 remains on the conveyor 10.

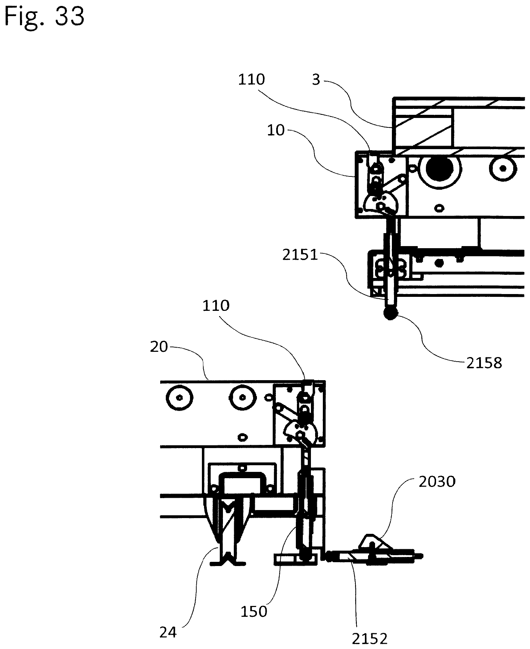

The bump 2030 for pushing the first push rod 2151 is configured to be movable in a direction substantially parallel to the conveying direction. Particularly, as shown in Figs. 31 and 33, the bump 2030 is movably supported by a second push rod 2152 which is fixed on the floor or the frame of the conveyor 10. The bump 2030 has slopes or inclined surfaces particularly at one end facing the conveyor 10 so that the bump 2030 can smoothly contact with the first push rod 2151, particularly the roller 2158, of the conveyor 10.

The second push rod 2152 has features similarly to the features of the push rod 150 of the trolley 10 of the first embodiment. Particularly, the second push rod 2152 has a roller on one end of the second push rod 2152. The roller is supported to be rotatable around an axis oriented in the vertical direction. The roller is configured to contact particularly with the ramp 22 of the trolley 20.

The second push rod 2152 is movably supported by a support cylinder fixed particularly on the floor or the frame of the conveyor. The second push rod 2152 is further adapted to be movable between a lock position and an unlock position. In Figs. 31 to 33, the second push rod 2152 is at the lock position. The second push rod 2152 is biased to be at the lock position by a biasing member such as a coil spring.

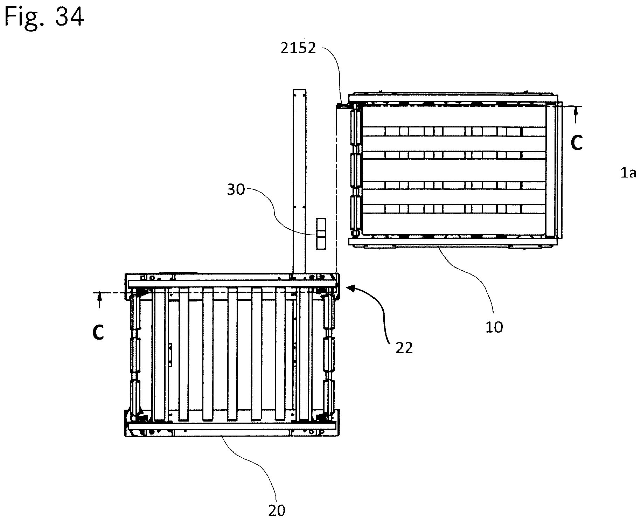

When the trolley 20 is moved in the horizontal direction so as to apart from the conveyor 10 as shown in Fig. 34, the ramp 22 of the trolley 20 is apart from the second push rod 2152 so that the second push rod 2152 is at the lock position.

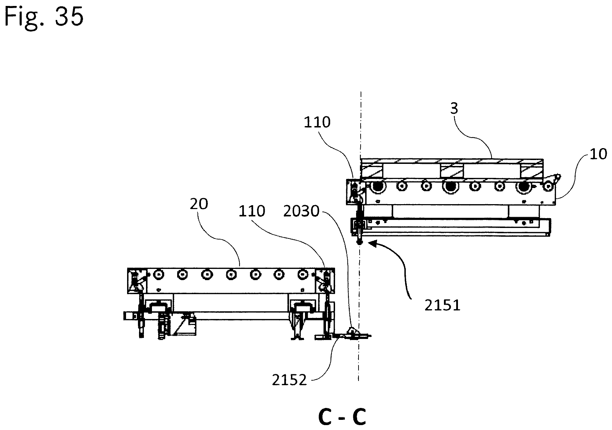

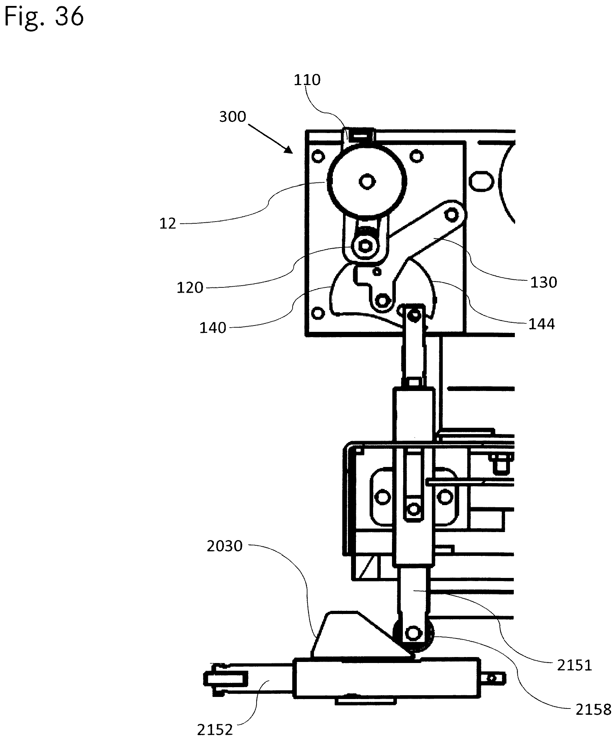

Referring to Figs. 35 and 36, when the second push rod 2152 is at the lock position, the bump 2030 is shifted with respect to the first push rod 2151 in the convening direction. In this state, as shown in Fig. 36, when the conveyor 10 is not lifted, and the vertical position of the conveyor 10 and the vertical position of the trolley 20 are identical, the bump 2030 does not sufficiently push the first push rod 2151. The first push rod 2151 stays at the lock position. Therefore, when the conveyor 10 and the trolley 20 are not aligned in the conveying direction, the stop element 110 is locked by the lock lever 130.

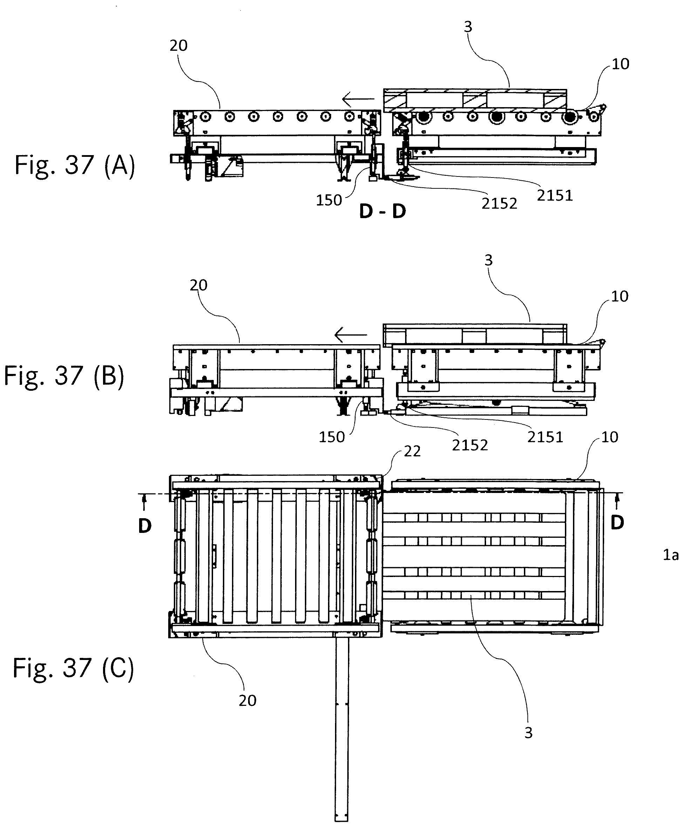

On the other hand, as shown in Fig. 37, when the conveyor 10 and the trolley 20 are aligned in the conveying direction, the ramp 22 of the trolley 20 contacts with the second push rod 2152 so that the second push rod 2152 is at the unlock position. In this state, the bump 2030 contacts with the first push rod 2151 so that the first push rod 2151 is at the unlock position, when the conveyor 10 is not lifted, and the vertical position of the conveyor 10 and the vertical position of the trolley 20 are identical. Therefore, the stop element 110 is unlocked so that a load moves to the trolley 20 from the conveyor 10.

The present invention should not be limited to the above-descried embodiments, and any other modifications and improvements may be applied within the scope of the present invention, as defined by the attached claims.

### List of Reference Numerals

- 1, 5:: transportation system
- 1a, 1b:: conveyor track
- 3:: load
- 7:: scissor lift system
- 10:: conveyor
- 12:: roller
- 20:: trolley
- 22:: ramp
- 24:: wheel
- 30:: bump
- 100:: stopper
- 110:: stop element
- 112:: axis
- 114:: opening
- 116:: support portion
- 118:: contact portion
- 120:: pin
- 122:: bearing
- 124:: extension
- 130:: lock lever
- 132:: seat
- 134:: inclined surface
- 140:: cam
- 142:: lock portion
- 144:: unlock portion
- 146:: pivot axis
- 148:: slit
- 150:: push rod
- 152:: connecting rod
- 154:: connecting pin
- 156:: roller
- 160:: biasing member
- 162:: support cylinder
- 200:: stopper
- 300:: stopper
- 1130:: lock lever
- 1132:: seat
- 1134:: inclined surface
- 1140:: cam
- 1142:: upper surface
- 1146:: pivot axis
- 1148:: gap
- 1152:: connecting plate
- 1154:: connecting pin
- 2151:: first push rod
- 2152:: second push rod
- 2158:: roller
- 2030:: bump

## Claims

1. A stopper (100; 200; 300) for a transportation system (1; 5) configured to convey a load (3), comprising:
a stop element (110) configured to contact with the load (3), wherein the stop element (110) is supported to be capable of pivoting around an axis (112);
a pin (120) movably supported by the stop element (110), wherein the stop element (110) has a slit or opening (114) configured to support the pin (120) movably along the opening (114);
a lock lever (130; 1130) having a seat (132; 1132) configured to engage with the pin (120);
**characterized by**
a cam (140; 1140) configured to move the pin (120); and
a push rod (150; 2151) connected to the cam (140; 1140),
wherein
the cam (140; 1140) is configured to disengage the pin (120) from the seat (132; 1132) of the lock lever (130; 1130) when the push rod (150; 2151) is moved from a lock position to an unlock position, and
the cam (140; 1140) is configured to engage the pin (120) with the seat (132; 1132) of the lock lever (130; 1130) when the push rod (150; 2151) is moved from the unlock position to the lock position.

2. The stopper (100; 200; 300) according to claim 1, further comprising
a biasing member (160) configured to bias the push rod (150; 2151) to be at the lock position.

3. The stopper (100; 200; 300) according to any one of the preceding claims, wherein
the lock lever (130; 1130) has an inclined surface (134; 1134) connected to the seat (132; 1132), and configured to guide the pin (120) toward the seat (132; 1132).

4. The stopper (100; 200; 300) according to any one of the preceding claims, wherein
the cam (140; 1140) is configured to stop moving the pin (12) when the push rod (150; 2151) is at the unlock position.

5. The stopper (100) according to any one of the preceding claims, wherein
the cam (140) has an unlock portion (144) extending in a circumferential direction and configured to contact with the pin (120) when the push rod (150; 2151) is at the unlock position, and
the distance between the unlock portion (144) and a pivot axis (146) of the cam (140; 1140) is substantially constant.

6. The stopper (100) according to any one of the preceding claims, wherein
the cam (140) has a lock portion (142) configured to face to the pin (120) when the push rod (150; 2151) is at the lock position.

7. The stopper (200) according to any one of the preceding claims, wherein
the cam (1140) is configured to stop pivoting when the push rod (150; 2151) is at the unlock position.

8. The stopper (200) according to any one of the preceding claims, wherein
the cam (1140) has a gap (1148) configured to engage with the push rod (150; 2151),
the gap (1148) is configured to disengage from the push rod (150; 2151) when the push rod (150; 2151) is at the unlock position.

9. The stopper (100; 200; 300) according to any one of the preceding claims, wherein
the seat (132; 1132) is configured to engage with the pin (120) in one of pivoting directions of the stop element (110), and
the seat (132; 1132) is configured to disengage from the pin (120) in the other direction of the pivoting directions of the stop element (110).

10. A conveyor (10) for conveying a load (3), comprising:
a stopper (100; 200; 300) according to any one of claims 1 to 9.

11. A trolley (20) for conveying a load (3), comprising:
a wheel (24) rotatable in a direction different from a direction conveying the load (3); and
a stopper (100; 200; 300) according to any one of claims 1 to 9.

12. A transportation system (1; 5), comprising
a conveyor (10) according to claim 10; and
a trolley (20) according to claim 11.

13. The transportation system (1; 5), according to claim 12, wherein
the trolley (20) has a ramp (22) configured to contact with the push rod (150; 2151) of the conveyor (10).

14. The transportation system (1; 5), according to claim 12 or 13, further comprising
a bump (30; 2030) configured to contact with the push rod (150; 2151) of the trolley (20) or the conveyor (10).

## Patentansprüche

1. Stopper (100; 200; 300) für ein Transportsystem (1; 5), welches konfiguriert ist, um eine Last (3) zu befördern, umfassend:
ein Anschlagelement (110), welcher derart konfiguriert ist, dass dieses die Last (3) berührt, wobei das Anschlagelement (110) derart gelagert ist, dass dieses um eine Achse (112) drehen kann;
einen Stift (120), welcher beweglich von dem Anschlagelement (110) getragen wird, wobei das Anschlagelement (110) einen Schlitz oder eine Öffnung (114) aufweist, welches derart konfiguriert ist, um den Stift (120) beweglich entlang der Öffnung (114) zu stützen;
einen Verriegelungshebel (130; 1130) mit einem Sitz (132; 1132), welcher derart konfiguriert ist, dass dieser mit dem Stift (120) in Eingriff kommt;
**gekennzeichnet durch**
einen Nocken (140; 1140), welcher derart konfiguriert ist, dass dieser den Stift (120) bewegt; und
eine Schubstange (150; 2151), welche mit dem Nocken (140; 1140) verbunden ist, wobei
der Nocken (140; 1140) derart konfiguriert ist, dass dieser den Stift (120) aus dem Sitz (132; 1132) des Verriegelungshebels (130; 1130) löst, wenn die Schubstange (150; 2151) von einer Verriegelungsposition zu einer Entriegelungsposition bewegt wird, und
der Nocken (140; 1140) derart konfiguriert ist, dass dieser den Stift (120) mit dem Sitz (132; 1132) des Verriegelungshebels (130; 1130) in Eingriff bringt, wenn die Schubstange (150; 2151) von der Entriegelungsposition in die Verriegelungsposition bewegt wird.

2. Der Stopper (100; 200; 300) nach Anspruch 1, ferner umfassend
ein Vorspannelement (160), welches derart konfiguriert ist, dass dieses die Schubstange (150; 2151) derart vorspannt, dass diese sich in der Verriegelungsposition befindet.

3. Der Stopper (100; 200; 300) nach einem der vorhergehenden Ansprüche, wobei der Verriegelungshebel (130; 1130) eine geneigte Oberfläche (134; 1134) aufweist, welche mit dem Sitz (132; 1132) verbunden ist und derart konfiguriert ist, dass diese den Stift (120) in Richtung des Sitzes (132; 1132) führt.

4. Der Stopper (100; 200; 300) nach einem der vorhergehenden Ansprüche, wobei der Nocken (140; 1140) derart konfiguriert ist, dass dieser die Bewegung des Stifts (12) stoppt, wenn sich die Schubstange (150; 2151) in der Entriegelungsposition befindet.

5. Der Stopper (100) nach einem der vorhergehenden Ansprüche, wobei
der Nocken (140) einen Entriegelungsabschnitt (144) aufweist, welcher sich in einer Umfangsrichtung erstreckt und derart konfiguriert ist, dass dieser mit dem Stift (120) in Kontakt kommt, wenn sich die Druckstange (150; 2151) in der Entriegelungsposition befindet, und
der Abstand zwischen dem Entriegelungsabschnitt (144) und einer Schwenkachse (146) des Nockens (140; 1140) im Wesentlichen konstant ist.

6. Der Stopper (100) nach einem der vorhergehenden Ansprüche, wobei
der Nocken (140) einen Verriegelungsabschnitt (142) aufweist, welcher derart konfiguriert ist, dass dieser dem Stift (120) zugewandt ist, wenn sich die Schubstange (150; 2151) in der Verriegelungsposition befindet.

7. Der Stopper (200) nach einem der vorhergehenden Ansprüche, wobei
der Nocken (1140) derart konfiguriert ist, dass dieser die Drehung stoppt, wenn sich die Schubstange (150; 2151) in der Entriegelungsposition befindet.

8. Der Stopper (200) nach einem der vorhergehenden Ansprüche, wobei
der Nocken (1140) einen Spalt (1148) aufweist, welcher derart konfiguriert ist, dass dieser mit der Schubstange (150; 2151) in Eingriff kommt,
der Spalt (1148) derart konfiguriert ist, dass dieser sich von der Schubstange (150; 2151) löst, wenn sich die Schubstange (150; 2151) in der Entriegelungsposition befindet.

9. Der Stopper (100; 200; 300) nach einem der vorhergehenden Ansprüche, wobei
der Sitz (132; 1132) derart konfiguriert ist, dass dieser mit dem Stift (120) in einer der Schwenkrichtungen des Anschlagelements (110) in Eingriff kommt, und
der Sitz (132; 1132) derart konfiguriert ist, dass dieser in der anderen Richtung der Schwenkrichtungen des Anschlagelements (110) mit dem Stift (120) außer Eingriff kommt.

10. Förderer (10) zum Transportieren einer Last (3), umfassend:
einen Stopper (100; 200; 300) nach einem der Ansprüche 1 bis 9.

11. Wagen (20) zum Transportieren einer Last (3), umfassend:
ein Rad (24), welches in einer Richtung drehbar ist, welche sich von der Transportrichtung der Last (3) unterscheidet; und
einen Stopper (100; 200; 300) nach einem der Ansprüche 1 bis 9.

12. Ein Transportsystem (1; 5), umfassend
einen Förderer (10) nach Anspruch 10; und
einen Wagen (20) nach Anspruch 11.

13. Das Transportsystem (1; 5) nach Anspruch 12, wobei
der Wagen (20) eine Rampe (22) aufweist, welche derart gestaltet ist, dass diese mit der Schubstange (150; 2151) des Förderers (10) in Kontakt kommt.

14. Das Transportsystem (1; 5) nach Anspruch 12 oder 13 umfasst ferner einen Höcker (30; 2030), welcher derart konfiguriert ist, dass dieser mit der Schubstange (150; 2151) des Wagens (20) oder des Förderers (10) in Kontakt kommt.

## Revendications

1. Butoir (100; 200; 300) pour un système de transport (1; 5) conçu afin de transporter une charge (3), comprenant :
un élément d'arrêt (110) conçu afin d'entrer en contact avec la charge (3),
dans lequel l'élément d'arrêt (110) est supporté de manière à pouvoir pivoter autour d'un axe (112);
une broche (120) supportée de façon mobile par l'élément d'arrêt (110),
dans lequel l'élément d'arrêt (110) a une fente ou une ouverture (114) conçue afin de supporter la broche (120) de manière mobile le long de l'ouverture (114);
un levier de verrouillage (130; 1130) ayant un siège (132; 1132) conçu afin de venir en prise avec la broche (120);
**caractérisé par**
une came (140; 1140) conçue afin de déplacer la broche (120); et
une tige de poussée (150; 2151) reliée à la came (140; 1140),
dans lequel la came (140; 1140) est conçue pour désolidariser la broche (120) du siège (132; 1132) du levier de verrouillage (130; 1130) lorsque la tige de poussée (150; 2151) est déplacée d'une position de verrouillage à une position de déverrouillage, et la came (140; 1140) est conçue afin de mettre en prise la broche (120) avec le siège (132; 1132) du levier de verrouillage (130; 1130) lorsque la tige de poussée (150; 2151) est déplacée de la position de déverrouillage à la position de verrouillage.

2. Butoir (100; 200; 300) selon la revendication 1, comprenant en outre un élément de sollicitation (160) conçu afin de solliciter la tige de poussée (150; 2151) pour qu'elle soit en position de verrouillage.

3. Butoir (100; 200; 300) selon l'une quelconque des revendications précédentes, dans lequel le levier de verrouillage (130; 1130) présente une surface inclinée (134; 1134) reliée au siège (132; 1132), et conçue afin de guider la broche (120) vers le siège (132; 1132).

4. Butoir (100; 200; 300) selon l'une quelconque des revendications précédentes, dans lequel la came (140; 1140) est conçue afin d'arrêter le déplacement de la broche (120) lorsque la tige de poussée (150; 2151) est en position de déverrouillage.

5. Butoir (100) selon l'une quelconque des revendications précédentes, dans lequel la came (140) comporte une partie de déverrouillage (144) s'étendant dans une direction circonférentielle et conçue afin d'entrer en contact avec la broche (120) lorsque la tige de poussée (150; 2151) est en position de déverrouillage, et la distance entre la partie de déverrouillage (144) et un axe de pivotement (146) de la came (140; 1140) est sensiblement constante.

6. Butoir (100) selon l'une quelconque des revendications précédentes, dans lequel la came (140) comporte une partie de verrouillage (142) conçue afin de faire face à la broche (120) lorsque la tige de poussée (150; 2151) est en position de verrouillage.

7. Butoir (200) selon l'une quelconque des revendications précédentes, dans lequel la came (1140) est conçue afin d'arrêter de pivoter lorsque la tige de poussée (150; 2151) est en position de déverrouillage.

8. Butoir (200) selon l'une quelconque des revendications précédentes, dans lequel la came (1140) présente un espace (1148) conçu afin de venir en prise avec la tige de poussée (150; 2151),
l'espace (1148) est conçu afin de se désolidariser de la tige de poussée (150; 2151) lorsque la tige de poussée (150; 2151) est en position de déverrouillage.

9. Butoir (100; 200; 300) selon l'une quelconque des revendications précédentes, dans lequel le siège (132; 1132) est conçu afin de venir en prise avec la tige (120) dans l'une des directions de pivotement de l'élément d'arrêt (110), et le siège (132; 1132) est conçu pour se désolidariser de la tige (120) dans l'autre direction des directions de pivotement de l'élément d'arrêt (110).

10. Convoyeur (10) destiné à transporter une charge (3), comprenant :
un butoir (100; 200; 300) selon l'une quelconque des revendications 1 à 9.

11. Chariot (20) destiné à transporter une charge (3), comprenant :
une roue (24) pouvant tourner dans une direction différente de la direction de transport de la charge (3); et
un butoir (100; 200; 300) selon l'une quelconque des revendications 1 à 9.

12. Système de transport (1; 5), comprenant
un convoyeur (10) selon la revendication 10; et
un chariot (20) selon la revendication 11.

13. Système de transport (1; 5), selon la revendication 12, dans lequel le chariot (20) a une rampe (22) conçue afin d'entrer en contact avec la tige de poussée (150; 2151) du convoyeur (10).

14. Système de transport (1; 5), selon la revendication 12 ou 13, comprenant en outre une bosse (30; 2030) conçue afin d'entrer en contact avec la tige de poussée (150; 2151) du chariot (20) ou du convoyeur (10).
